# EUROPÄISCHE PATENTSCHRIFT

(11) **EP 1 523 427 B1**
(45) Veröffentlichungstag und Bekanntmachung des Hinweises auf die Patenterteilung: **23.04.2008**
(21) Anmeldenummer: 03763576.0
(22) Anmeldetag: 03.02.2003
(51) Int. Cl.: B60K 31/00, B60T 8/00

(54) **VERFAHREN ZUR REGELUNG DER GESCHWINDIGKEIT EINES FAHRZEUGS**
METHOD FOR CONTROLLING THE SPEED OF A VEHICLE
PROCEDE POUR REGULER LA VITESSE D'UN VEHICULE

(30) Priorität: 11.07.2002 DE 10231360
(43) Veröffentlichungstag der Anmeldung: 20.04.2005
(73) Patentinhaber: ROBERT BOSCH GMBH, 70442 Stuttgart (DE)
(72) Erfinder: LOCK, Erwin, 71034 Boeblingen (DE); MUEHLBAUER, Christian, 70771 Echterdingen (DE); KUSTOSCH, Mario, 71706 Markgroeningen (DE)
(86) Internationale Anmeldenummer: PCT/DE2003/000292
(87) Internationale Veröffentlichungsnummer: WO 2004/007230

(56) Entgegenhaltungen:
- DE-A- 2 241 818
- DE-A- 4 420 116
- DE-A- 19 654 769
- DE-A- 19 835 937
- US-A- 5 003 483

## Beschreibung

### Stand der Technik

Die Erfindung geht von einem Verfahren zur Regelung der Geschwindigkeit eines Fahrzeugs nach der Gattung des Hauptanspruchs aus.

Aus der DE 195 37 273 A1 ist bekannt, mit Hilfe einer Geschwindigkeitsregelung verschleißfreie zusätzliche Verzögerungseinrichtungen, wie beispielsweise Retarder, anzusteuern. Retarder und auch Motorbremsen können dazu verwendet werden, die Fahrzeuggeschwindigkeit im Gefälle dort konstant zu halten, wo ein Eingriff in die Motorsteuerung allein gegebenenfalls nicht ausreicht, eine niedrige Geschwindigkeit zu halten. Die zusätzlichen Verzögerungseinrichtungen sind dabei von den Betriebsbremsen eines Fahrzeugs zu unterscheiden.

Aus der DE 198 35 937 A1 ist ein Verfahren zur Regelung der Abstiegsgeschwindigkeit eines Gelände-Fahrzeugs bekannt. Dabei ist die Fahrzeuggeschwindigkeit mittels einer Elektronik durch einen aktiven Bremseingriff, d. h., ohne dass der Fahrer die Bremse betätigen muss, auf eine konstante Abstiegsgeschwindigkeit einregelbar. Das beschriebene Verfahren ist besonders vorteilhaft anwendbar bei Gelände-Fahrzeugen, bei denen die Bremswirkung des Motors in steilen Gefällen nicht mehr allein zur Verlangsamung des Fahrzeugs ausreicht. Sobald die Abfahrtsregelung in Funktion tritt, wird ein ASR-Magnetventil erregt und damit direkt Bremsdruck auf die Bremszylinder der Räder der Vorderachse geleitet (aktive Bremsung). Die Elektronik regelt dabei die Geschwindigkeit des Fahrzeugs durch eine entsprechende Ansteuerung der Magnetregelventile derart, dass eine vorgegebene Geschwindigkeit unabhängig von Änderungen des Gefälles eingeregelt und beibehalten wird. Eine aktiv gebremste Bergabfahrt erfolgt dabei nur, wenn die Bremswirkung des Motors allein nicht ausreichend groß ist, um das Fahrzeug zu verzögern.

Aus der US 5,003,483, die den nächstliegenden Stand der Technik darstellt, sind ein Verfahren und eine Vorrichtung zur Steuerung der Geschwindigkeit eines Motorfahrzeugs bekannt, bei denen eine Zielgeschwindigkeit vorgegeben und bei jeder Betätigung einer vom Fahrer betätigbaren Bremse verringert wird. Wenn die aktuelle Fahrzeuggeschwindigkeit die Zielgeschwindigkeit überschreitet, dann wird ein Hilfsbremssystem aktiviert, um die aktuelle Fahrzeuggeschwindigkeit auf die Zielgeschwindigkeit zu verringern.

### Vorteile der Erfindung

Das erfindungsgemäße Verfahren zur Regelung der Geschwindigkeit eines Fahrzeugs mit den Merkmalen des Hauptanspruchs hat demgegenüber den Vorteil, dass bei Überschreiten einer vorgegebenen Sollgeschwindigkeit durch eine Istgeschwindigkeit des Fahrzeugs um mehr als eine erste vorgegebene Geschwindigkeitsdifferenz eine Betriebsbremse des Fahrzeugs aktiviert wird. Auf diese Weise lässt sich die Funktionalität der Fahrgeschwindigkeitsregelung derart erweitern, dass die Geschwindigkeit beispielsweise auf Gefällstrecken auch dann gehalten werden kann, falls das Schleppmoment des Antriebsstranges des Fahrzeugs nicht genügend Bremswirkung aufbringt. Die Fahrgeschwindigkeitsregelung lässt sich somit in größerem Umfang einsetzen, wodurch der Fahrkomfort steigt.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn die Betriebsbremse erst dann aktiviert wird, wenn andere Maßnahmen, wie beispielsweise eine Reduzierung der Momentenanforderung der Fahrgeschwindigkeitsregelung, eine Leerlaufregelung, eine Schubabschaltung und/oder eine zusätzliche Aktivierung eines oder mehrerer Nebenaggregate nicht zu einer ausreichenden Bremswirkung führen, um die Istgeschwindigkeit des Fahrzeugs der vorgegebenen Sollgeschwindigkeit genügend anzunähern. Auf diese Weise kann die Fahrgeschwindigkeitsregelung vor Aktivierung der Betriebsbremse und damit die Betriebsbremse schonend unter Ausnutzung der Motorbremswirkung realisiert werden. Wird bei aktivierter Motorbremswirkung zusätzlich die Betriebsbremse aktiviert, so lässt sich eine verstärkte Bremswirkung erzielen und die Fahrgeschwindigkeitsregelung auch bei starkem Gefälle aufrecht erhalten, d.h. die Istgeschwindigkeit des Fahrzeugs der vorgegebenen Sollgeschwindigkeit auch bei starkem Gefälle genügend nachgeführt bzw. angenähert werden.

Ein weiterer Vorteil besteht darin, dass die Betriebsbremse deaktiviert wird, wenn die Istgeschwindigkeit die Sollgeschwindigkeit wieder unterschreitet. Auf diese Weise wird bei ausreichend ausgewählter erster vorgegebener Geschwindigkeitsdifferenz ein ständiges Aus- und Einschalten der Betriebsbremse vermieden und der Fahrkomfort dadurch erhöht.

Besonders vorteilhaft ist es, wenn die Leerlaufregelung deaktiviert wird, so lange die Betriebsbremse aktiviert ist. Auf diese Weise lässt sich bei aktivierter Betriebsbremse Kraftstoff sparen.

Die Unterstützung der Betriebsbremse durch die Motorbremse lässt sich dadurch erreichen, dass die Schubabschaltung aktiviert wird, so lange die Betriebsbremse aktiviert ist.

Ein weiterer Vorteil ergibt sich, wenn die Schubabschaltung bei Überschreiten der Sollgeschwindigkeit durch die Istgeschwindigkeit um eine vierte vorgegebene Geschwindigkeitsdifferenz aktiviert wird, die größer als eine zweite vorgegebene Geschwindigkeitsdifferenz ist, bei der die Leerlaufregelung aktiviert wird. Auf diese Weise wird die Schubabschaltung erst dann aktiviert, wenn die durch die Leerlaufregelung erzielte Bremswirkung bei Nachführung der Istgeschwindigkeit des Fahrzeugs an die vorgegebene Sollgeschwindigkeit nicht ausreichend war. Dies erhöht den Fahrkomfort, da eine zu starke Momentenreduzierung, wie bei direkter Schubabschaltung ohne vorherige Leerlaufregelung, vermieden wird.

### Zeichnung

Ein Ausführungsbeispiel der Erfindung ist in der Zeichnung dargestellt und in der nachfolgenden Beschreibung näher erläutert.

Es zeigen
- Figur 1: ein Blockschaltbild mit Komponenten zur Umsetzung des erfindungsgemäßen Verfahrens,
- Figur 2: einen Ablaufplan für einen beispielhaften Ablauf des erfindungsgemäßen Verfahrens,
- Figur 3a): den Verlauf der Istgeschwindigkeit des Fahrzeugs über der Zeit,
- Figur 3b): den Verlauf der Momentenanforderung der Fahrgeschwindigkeitsregelung über der Zeit,
- Figur3c): den Verlauf der Leerlaufregelung über der Zeit,
- Figur 3d): den Verlauf der Schubabschaltung über der Zeit und
- Figur 3e): den Verlauf einer Anforderung an die Betriebsbremse des Fahrzeugs über der Zeit.

### Beschreibung des Ausführungsbeispiels

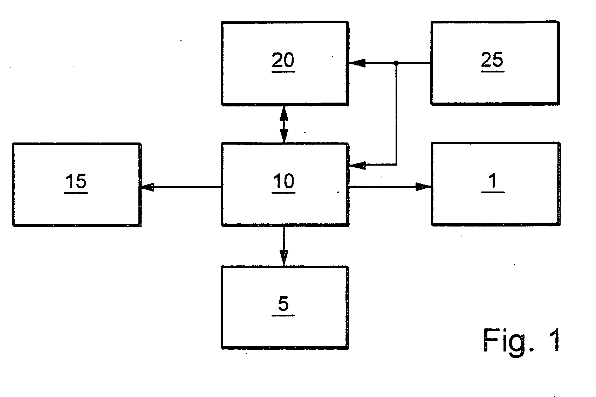

In Figur 1 kennzeichnet 10 eine Steuerung eines Kraftfahrzeugs, die mit einer Betriebsbremse 1 des Kraftfahrzeugs, die im Regelfall eine einem Verschleiß unterliegende Reibungsbremse ist, einer Leerlaufregelung 5, einem oder mehreren Nebenaggregaten 15 und einer Fahrgeschwindigkeitsregelung 20 verbunden ist. Ferner ist eine Geschwindigkeitsmessvorrichtung 25 vorgesehen, die die Istgeschwindigkeit des Kraftfahrzeugs misst und mit der Fahrzeugsteuerung 10 und der Fahrgeschwindigkeitsregelung 20 verbunden ist. Von der Geschwindigkeitsmessvorrichtung 25 empfängt die Fahrzeugsteuerung 10 und die Fahrgeschwindigkeitsregelung 20 die aktuelle Istgeschwindigkeit des Fahrzeugs.

Die Fahrzeugsteuerung 10 stellt in diesem Ausführungsbeispiel eine erweiterte Motorsteuerung dar, die zusätzlich zur Steuerung des Motors des Fahrzeugs auch die Betriebsbremse 1 des Fahrzeugs ansteuert.

Die Fahrgeschwindigkeitsregelung 20 gibt im aktivierten Zustand eine Momentenanforderung an die Fahrzeugsteuerung 10 ab, die diese in nicht dargestellter Weise durch entsprechende Einstellung beispielsweise des Zündzeitpunktes, der Einspritzzeit oder der Luftzufuhr in den Brennraum der Brennkraftmaschine des Kraftfahrzeugs umsetzt.

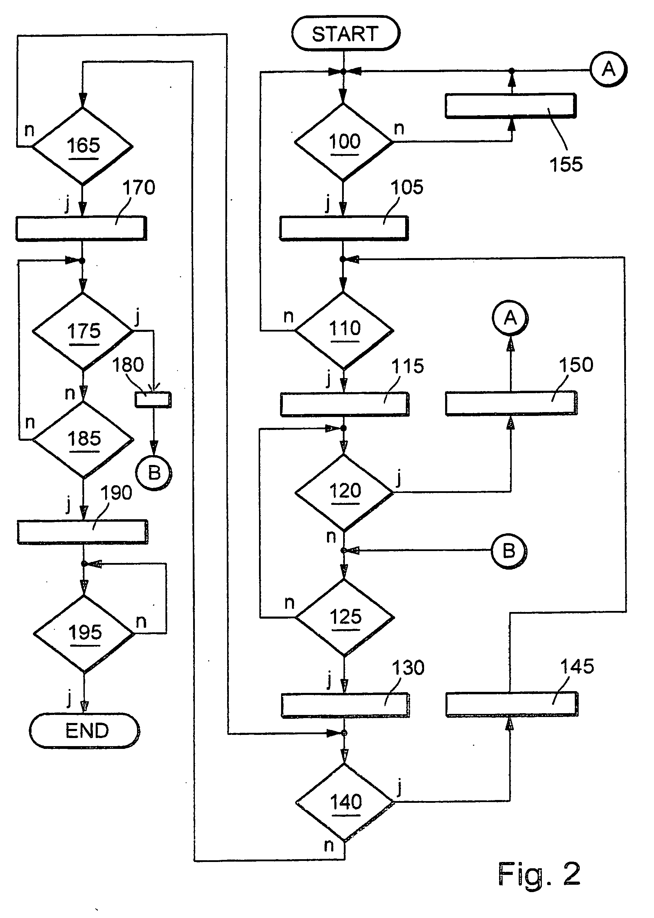

In Figur 2 wird das erfindungsgemäße Verfahren anhand eines Ablaufplans beispielhaft beschrieben. Das Programm wird dabei mit Aktivierung der Fahrgeschwindigkeitsregelung 20 beispielsweise an einem Tempomatenhebel durch den Fahrer des Fahrzeugs gestartet. Bei einem Programmpunkt 100 prüft die Fahrgeschwindigkeitsregelung 20, ob die Istgeschwindigkeit des Fahrzeugs größer als die vorgegebene Sollgeschwindigkeit ist. Ist dieser der Fall, so wird zu einem Programmpunkt 105 verzweigt, andernfalls wird zu einem Programmpunkt 155 verzweigt.

Bei Programmpunkt 155 wird die derzeitige Momentenanforderung von der Fahrgeschwindigkeitsregelung 20 beibehalten, wenn die Istgeschwindigkeit der vorgegebenen Sollgeschwindigkeit entspricht oder angehoben, wenn die Istgeschwindigkeit kleiner als die vorgegebene Sollgeschwindigkeit ist. Anschließend wird wieder zu Programmpunkt 100 zurückverzweigt.

Bei Programmpunkt 105 reduziert die Fahrgeschwindigkeitsregelung 20 die Momentenanforderung an die Fahrzeugsteuerung 10. Die Reduzierung der Momentenanforderung kann dabei beispielsweise um einen geeignet gewählten vorgegebenen Dekrementwert erfolgen, sowie die zu Programmpunkt 155 beschriebene Erhöhung der Momentenanforderung um einen ebenfalls geeignet gewählten vorgegebenen Inkrementwert realisiert werden kann. Nach Programmpunkt 105 wird zu einem Programmpunkt 110 verzweigt.

Bei Programmpunkt 110 prüft die Fahrgeschwindigkeitsregelung 20, ob die Istgeschwindigkeit die vorgegebene Sollgeschwindigkeit um mehr als eine zweite vorgegebene Geschwindigkeitsdifferenz überschreitet. Ist dies der Fall, so wird zu einem Programmpunkt 115 verzweigt, andernfalls wird zu Programmpunkt 100 zurückverzweigt.

Bei Programmpunkt 115 wird in der Fahrgeschwindigkeitsregelung 20 ein Aktivierungssignal gesetzt und an die Fahrzeugsteuerung 10 übertragen. Mit Empfang des gesetzten Aktivierungssignals veranlasst die Fahrzeugsteuerung 10 bei Programmpunkt 115 eine Aktivierung der Leerlaufregelung 5, die die Momentenanforderung von den aktivierten Nebenaggregaten des Fahrzeugs, wie beispielsweise Klimaanlage oder Generator reduziert. Anschließend wird zu einem Programmpunkt 120 verzweigt.

Bei Programmpunkt 120 prüft die Fahrzeugsteuerung 10, ob die Istgeschwindigkeit die vorgegebene Sollgeschwindigkeit um weniger als eine dritte vorgegebene Geschwindigkeitsdifferenz überschreitet, die kleiner als die zweite vorgegebene Geschwindigkeitsdifferenz ist. Ist dies der Fall, so wird zu einem Programmpunkt 150 verzweigt, andernfalls wird zu einem Programmpunkt 125 verzweigt.

Bei Programmpunkt 150 veranlasst die Fahrzeugsteuerung 10 eine Deaktivierung der Leerlaufregelung 5. Sobald die Fahrgeschwindigkeitsregelung 20 feststellt, dass die Istgeschwindigkeit die vorgegebene Sollgeschwindigkeit wieder um weniger als die dritte vorgegebene Geschwindigkeitsdifferenz überschreitet, so veranlasst sie das Zurücksetzen des Aktivierungssignals. Nach Programmpunkt 150 wird wieder zu Programmpunkt 100 zurückverzweigt.

Bei Programmpunkt 125 prüft die Fahrzeugsteuerung 10, ob die Istgeschwindigkeit die vorgegebene Sollgeschwindigkeit um mehr als eine vierte vorgegebene Geschwindigkeitsdifferenz überschreitet, die größer als die zweite vorgegebene Geschwindigkeitsdifferenz ist. Ist dies der Fall, so wird zu einem Programmpunkt 130 verzweigt, andernfalls wird zu einem Programmpunkt 120 zurückverzweigt.

Bei Programmpunkt 130 veranlasst die Fahrzeugsteuerung 10 die Aktivierung einer Schubabschaltung des Fahrzeugs, in dem sie beispielsweise die Einspritzung von Kraftstoff unterbricht und deaktiviert die Leerlaufregelung 5. Anschließend wird zu einem Programmpunkt 140 verzweigt.

Bei Programmpunkt 140 prüft die Fahrzeugsteuerung 10, ob die Istgeschwindigkeit die vorgegebene Sollgeschwindigkeit um weniger als eine fünfte vorgegebene Geschwindigkeitsdifferenz überschreitet, die größer als die zweite vorgegebene Geschwindigkeitsdifferenz und kleiner als die vierte vorgegebene Geschwindigkeitsdifferenz ist. Ist dies der Fall, so wird zu einem Programmpunkt 145 verzweigt, andernfalls wird zu einem Programmpunkt 165 verzweigt.

Bei Programmpunkt 145 veranlasst die Fahrzeugsteuerung 10 eine Deaktivierung der Schubabschaltung, d.h. in diesem Beispiel eine Wiedereinsetzung der Kraftstoffzufuhr. Anschließend veranlasst die Fahrzeugsteuerung 10 die Fahrgeschwindigkeitsregelung 20 beispielsweise mit Hilfe eines weiteren geeigneten Aktivierungssignals zur Fortsetzung des Programms bei Programmpunkt 110.

Bei Programmpunkt 165 prüft die Fahrzeugsteuerung 10, ob die Istgeschwindigkeit die vorgegebene Sollgeschwindigkeit um mehr als eine sechste vorgegebene Geschwindigkeitsdifferenz überschreitet, die größer als die vierte vorgegebene Geschwindigkeitsdifferenz ist. Ist dies der Fall, so wird zu einem Programmpunkt 170 verzweigt, andernfalls wird zu Programmpunkt 140 zurückverzweigt.

Bei Programmpunkt 170 veranlasst die Fahrzeugsteuerung 10 die Aktivierung eines oder mehrerer zuvor nicht aktivierter Nebenaggregate, die zusätzliches Schleppmoment bei der aktivierten Schubabschaltung erfordern und dadurch eine zusätzliche Bremswirkung entfalten. Sind keine weiteren aktivierbaren Nebenaggregate im Fahrzeug vorhanden, so wird vom Programmpunkt 165 direkt zu einem Programmpunkt 185 verzweigt, sofern die Istgeschwindigkeit die vorgegebene Sollgeschwindigkeit um mehr als die sechste vorgegebene Geschwindigkeitsdifferenz überschreitet. Wird jedoch Programmpunkt 170 ausgeführt, so wird anschließend zu einem Programmpunkt 175 verzweigt.

Bei Programmpunkt 175 prüft die Fahrzeugsteuerung 10, ob die Istgeschwindigkeit die vorgegebene Sollgeschwindigkeit um weniger als eine siebte vorgegebene Geschwindigkeitsdifferenz überschreitet, die kleiner als die sechste vorgegebene Geschwindigkeitsdifferenz und größer als die vierte vorgegebene Geschwindigkeitsdifferenz ist. Ist dies der Fall, so wird zu einem Programmpunkt 180 verzweigt, andernfalls wird zu Programmpunkt 185 verzweigt.

Bei Programmpunkt 180 veranlasst die Fahrzeugsteuerung 10 eine Deaktivierung und damit Abschaltung des oder der bei Programmpunkt 170 zusätzlich aktivierten bzw. eingeschalteten Nebenaggregate. Anschließend wird zu Programmpunkt 125 zurückverzweigt.

Bei Programmpunkt 185 prüft die Fahrzeugsteuerung 10, ob die Istgeschwindigkeit die vorgegebene Sollgeschwindigkeit um mehr als eine erste vorgegebene Geschwindigkeitsdifferenz überschreitet, die größer als die sechste vorgegebene Geschwindigkeitsdifferenz ist. Ist dies der Fall, so wird zu einem Programmpunkt 190 verzweigt, andernfalls wird zu Programmpunkt 175 für den Fall zurückverzweigt, dass ein oder mehrere zusätzliche Nebenaggregate bei Programmpunkt 170 zugeschaltet bzw. aktiviert wurden. Andernfalls wird von Programmpunkt 185 zu Programmpunkt 140 zurückverzweigt, wenn die Istgeschwindigkeit die vorgegebene Sollgeschwindigkeit nicht um mehr als die erste vorgegebene Geschwindigkeitsdifferenz überschreitet.

Bei Programmpunkt 190 veranlasst die Fahrzeugsteuerung 10 eine Aktivierung der Betriebsbremse 1 des Fahrzeugs. Anschließend wird zu einem Programmpunkt 195 verzweigt.

Bei Programmpunkt 195 prüft die Fahrzeugsteuerung 10, ob die Istgeschwindigkeit kleiner als die vorgegebene Sollgeschwindigkeit ist. Ist dies der Fall, so wird das Programm verlassen, andernfalls wird zu Programmpunkt 195 zurückverzweigt. Wenn die Istgeschwindigkeit kleiner als die vorgegebene Sollgeschwindigkeit wird, so wird dies auch von der Fahrzeugregelung 20 detektiert, die darauf hin das von ihr gesetzte Aktivierungssignal wieder zurück setzt.

Anschließend wird das beschriebene Programm erneut durchlaufen, sofern die Fahrgeschwindigkeitsregelung 20 noch aktiv ist.

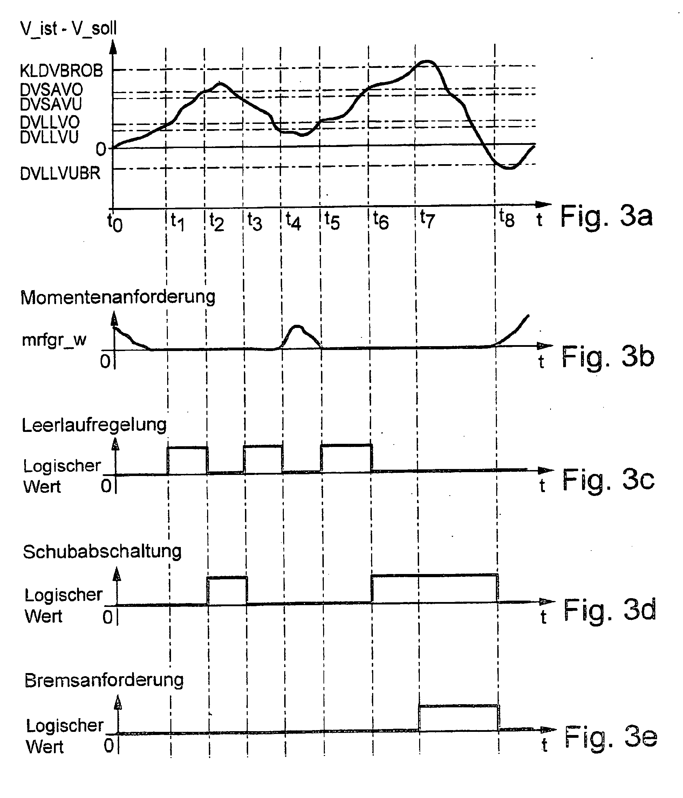

In Figur 3a) wird das erfindungsgemäße Verfahren anhand eines beispielhaften Verlaufs der Differenz zwischen der Istgeschwindigkeit des Fahrzeugs und der vorgegebenen Sollgeschwindigkeit über der Zeit t dargestellt. Die Istgeschwindigkeit ist dabei als v_ist und die vorgegebene Sollgeschwindigkeit als v_soll gekennzeichnet, so dass die über der Ordinate aufgetragene Differenz v_ist - v_soll beträgt. Dabei ist für die Differenz v_ist - v_soll auf der Ordinate die erste vorgegebene Geschwindigkeitsdifferenz als KLDVBROB gekennzeichnet und beträgt beispielsweise 4 km/h. Die zweite vorgegebene Geschwindigkeitsdifferenz ist in Figur 3a) durch DVLLVO gekennzeichnet und beträgt beispielhaft 2 km/h. Die dritte vorgegebene Geschwindigkeitsdifferenz ist in Figur 3a) durch DVLLVU gekennzeichnet und beträgt beispielhaft 1,5 km/h. Die vierte vorgegebene Geschwindigkeitsdifferenz ist in Figur 3a) durch DVSAVO gekennzeichnet und beträgt beispielhaft 3 km/h. Die fünfte vorgegebene Geschwindigkeitsdifferenz ist in Figur 3a) durch DVSAVU gekennzeichnet und beträgt beispielhaft 2,5 km/h. Die sechste und die siebte vorgegebene Geschwindigkeitsdifferenz sind in Figur 3a) nicht dargestellt, da in diesem Beispiel davon ausgegangen wird, dass keine zusätzlichen Nebenaggregate aktiviert werden.

Durch die zweite vorgegebene Geschwindigkeitsdifferenz DVLLVO und die dritte vorgegebene Geschwindigkeitsdifferenz DVLLVU wird eine Hysterese realisiert und verhindert, dass die Leerlaufregelung 5 bei einem Schwanken der Differenz v_ist - v_soll um die zweite vorgegebene Geschwindigkeitsdifferenz DVLLVO ständig aktiviert und wieder deaktiviert wird. Entsprechend wird durch die vierte vorgegebene Geschwindigkeitsdifferenz DVSAVO und die fünfte vorgegebene Geschwindigkeitsdifferenz DVSAVU eine Hysterese bewirkt und verhindert, dass ständig zwischen Schubabschaltung und Leerlaufregelung umgeschaltet wird, wenn die Differenz v_ist - v_soll um die vierte vorgegebene Geschwindigkeitsdifferenz DVSAVO schwankt.

Zusätzlich kann es bei der Erfindung vorgesehen sein, dass die für die Fahrgeschwindigkeitsregelung aktivierte Betriebsbremse 1 erst dann wieder deaktiviert wird, wenn die vorgegebene Sollgeschwindigkeit v_soll die Istgeschwindigkeit v_ist um mehr als einen vorgegebenen Abbruchwert, der in Figur 3a) durch DVLLVUBR gekennzeichnet ist, überschreitet. Dies bedeutet für das in Figur 2 dargestellte Ablaufdiagramm, dass die Fahrzeugsteuerung 10 bei Programmpunkt 195 prüft, ob die vorgegebene Sollgeschwindigkeit um mehr als den vorgegebenen Abbruchwert DVLLVUBR die Istgeschwindigkeit überschreitet. Ist dies der Fall, so wird das Programm verlassen, andernfalls wird wieder zu Programmpunkt 195 zurückverzweigt. Auf diese Weise wird auch für die Aktivierung der Betriebsbremse zur Fahrgeschwindigkeitsregelung eine Hysterese realisiert, die ein zu häufiges Umschalten zwischen der Motorbremse und der Betriebsbremse des Fahrzeugs verhindert.

In Figur 3a) steigt die Differenz v_ist - v_soll vom Zeitpunkt t=0 bis zu einem ersten Zeitpunkt t₁ an und erreicht zum ersten Zeitpunkt t₁ die zweite vorgegebene Geschwindigkeitsdifferenz DVLLVO. In Figur 3b) ist die Momentenanforderung der Fahrgeschwindigkeitsregelung über der Zeit t dargestellt und mit mrfgr_w gekennzeichnet. Das Ansteigen der Differenz v_ist -v_soll bis zum ersten Zeitpunkt t₁ führt zu einer Reduzierung der Momentenanforderung mrfgr_w bis auf Null noch vor Erreichen des ersten Zeitpunkts t₁. In Figur 3c) ist über der Zeit t mittels eines logischen Wertes dargestellt, ob die Leerlaufregelung 5 aktiviert ist, oder nicht. In Figur 3d) ist über der Zeit t mittels eines logischen Wertes dargestellt, ob die Schubabschaltung aktiviert ist, oder nicht. In Figur 3e) ist über der Zeit t mittels eines logischen Wertes dargestellt, ob eine Bremsanforderung zur Aktivierung der Betriebsbremse 1 für die Fahrgeschwindigkeitsregelung 20 vorliegt, oder nicht.

Vom Zeitpunkt t=0 bis zum ersten Zeitpunkt t₁ sind die logischen Werte für die Leerlaufregelung, die Schubabschaltung und die Bremsanforderung gleich Null, d.h. die Leerlaufregelung, die Schubabschaltung und die Betriebsbremse sind nicht aktiviert. Zum Zeitpunkt t₁ überschreitet die Differenz v_ist - v_soll die zweite vorgegebene Geschwindigkeitsdifferenz DVLLVO. Dies führt zur Aktivierung der Leerlaufregelung, deren logischer Wert zum Zeitpunkt t₁ gesetzt wird. Die logischen Werte für die Schubabschaltung und die Bremsanforderung bleiben weiterhin gleich Null, so dass die Schubabschaltung und die Betriebsbremse weiterhin deaktiviert sind. Da die Momentenanforderung mrfgr_w bereits vor Erreichen des ersten Zeitpunktes t₁ auf Null zurück ging, kann durch Aktivierung der Leerlaufregelung auch die Momentenanforderung der aktivierten Nebenaggregate reduziert und somit zusätzliche Bremswirkung durch das Schleppmoment der Antriebseinheit des Fahrzeugs erzielt werden. Die Differenz v_ist - v_soll steigt vom ersten Zeitpunkt t₁ bis zu einem zweiten Zeitpunkt t₂ weiter an und überschreitet zum zweiten Zeitpunkt t₂ die vierte vorgegebene Geschwindigkeitsdifferenz DVSAVO. Somit wird zum zweiten Zeitpunkt t₂ der logische Wert für die Schubabschaltung gesetzt und die Schubabschaltung aktiviert, wohingegen die Leerlaufregelung zum zweiten Zeitpunkt t₂ deaktiviert und der logische Wert für die Leerlaufregelung zurückgesetzt wird. Der logische Wert für die Bremsanforderung bleibt weiterhin gleich Null, so dass die Betriebsbremse 1 nach wie vor deaktiviert ist. Durch die Schubabschaltung wird die durch die Leerlaufregelung 5 eingeleitete Motorbremse aufgrund der Abschaltung der Kraftstoffzufuhr in ihrer Wirkung verstärkt. Dabei sind sämtliche Momentenanforderungen der aktivierten Nebenaggregate auf Null reduziert. Aufgrund der zwischen dem ersten Zeitpunkt t₁ und dem zweiten Zeitpunkt t₂ aktivierten Leerlaufregelung 5 erfolgt der Übergang bis zur Reduzierung der Momentenanforderungen der aktivierten Nebenaggregate auf Null nicht abrupt, so dass der Fahrkomfort nicht wesentlich beeinträchtigt wird.

Der erste Zeitpunkt t₁ folgt dem Zeitpunkt t = 0 nach. Der zweite Zeitpunkt t₂ folgt dem ersten Zeitpunkt t₁ nach.

Zwischen dem zweiten Zeitpunkt t₂ und einem nachfolgenden dritten Zeitpunkt t₃ erreicht die Differenz v_ist - v_soll einen Maximalwert, der jedoch kleiner als die erste vorgegebene Geschwindigkeitsdifferenz KLDVBROB ist, so dass die Betriebsbremse 1 nicht aktiviert wird. Aufgrund der durch die aktivierte Schubabschaltung erzielten Bremswirkung sinkt die Differenz v_ist - v_soll anschließend wieder ab und unterschreitet zum dritten Zeitpunkt t₃ die fünfte vorgegebene Geschwindigkeitsdifferenz DVSAVU. Somit wird zum dritten Zeitpunkt t₃ die Schubabschaltung wieder deaktiviert und der logische Wert für die Schubabschaltung zurückgesetzt, wohingegen die Leerlaufregelung zum dritten Zeitpunkt t₃ erneut aktiviert und ihr logischer Wert gesetzt wird.

Die Reduktion der Differenz v_ist - v_soll kann natürlich auch durch eine Verringerung des Gefälles der Fahrstrecke mit verursacht sein. Zu einem dem dritten Zeitpunkt t₃ nachfolgenden vierten Zeitpunkt t₄ unterschreitet dann die Differenz v_ist - v_soll die dritte vorgegebene Geschwindigkeitsdifferenz DVLLVU, so dass zum vierten Zeitpunkt t₄ auch die Leerlaufregelung wieder deaktiviert und deren logischer Wert auf Null zurückgesetzt wird. Zwischen dem vierten Zeitpunkt t₄ und einem nachfolgenden fünften Zeitpunkt t₅ erreicht die Differenz v_ist - v_soll ein Minimum, das größer Null und kleiner als die dritte vorgegebene Geschwindigkeitsdifferenz DVLLVU ist. Somit kann zwischen dem vierten Zeitpunkt t₄ und dem fünften Zeitpunkt t₅ die Fahrgeschwindigkeitsregelung 20 wieder durch eine Momentenanforderung mrfgr_w ≥ 0 realisiert werden. Zwischen dem vierten Zeitpunkt t₄ und dem fünften Zeitpunkt t₅ sind die Leerlaufregelung, die Schubabschaltung und die Betriebsbremse 1 deaktiviert. Bis zum fünften Zeitpunkt t₅ steigt die Differenz v_ist - v_soll wieder an, so dass die Momentenanforderung mrfgr_w der Fahrgeschwindigkeitsregelung 20 wieder reduziert wird. Zum fünften Zeitpunkt t₅ überschreitet die Differenz v_ist - v_soll die zweite vorgegebene Geschwindigkeitsdifferenz DVLLVO, so dass zum fünften Zeitpunkt t₅ die Momentenanforderung mrfgr_w wieder auf Null zurückgegangen ist und die Leerlaufregelung 5 erneut durch Setzen des logischen Wertes aktiviert wird.

Vom fünften Zeitpunkt t₅ steigt die Differenz v_ist - v_soll weiter an und überschreitet zu einem den fünften Zeitpunkt t₅ nachfolgenden sechsten Zeitpunkt t₆ wiederum die vierte vorgegebene Geschwindigkeitsdifferenz DVSAVO. Somit wird zum sechsten Zeitpunkt t₆ die Leerlaufregelung 5 mit Zurücksetzen ihres logischen Wertes auf Null wieder deaktiviert und die Schubabschaltung durch Setzen ihres logischen Wertes wieder aktiviert. Die Betriebsbremse 1 bleibt weiterhin deaktiviert. Vom sechsten Zeitpunkt t₆ an steigt die Differenz v_ist - v_soll weiter an und überschreitet zu einem dem sechsten Zeitpunkt t₆ nachfolgenden siebten Zeitpunkt t₇ die erste vorgegebene Geschwindigkeitsdifferenz KLDVBROB. Somit wird zum siebten Zeitpunkt t₇ die Betriebsbremse 1 aktiviert, wobei der logische Wert der Bremsanforderung zum siebten Zeitpunkt t₇ gesetzt wird. Die Schubabschaltung bleibt weiterhin aktiviert, so dass die Betriebsbremse 1 von der durch die Schubabschaltung realisierten Motorbremse unterstützt wird. Kurz nach dem siebten Zeitpunkt t₇ erreicht die Differenz v_ist - v_soll ein Maximum oberhalb der ersten vorgegebenen Geschwindigkeitsdifferenz KLDVBROB und sinkt anschließend aufgrund der Bremswirkung und gegebenenfalls eines wieder sinkenden Gefälles relativ steil ab. Zu einem dem siebten Zeitpunkt t₇ nachfolgenden achten Zeitpunkt t₈ unterschreitet dann die Differenz v_ist - v_soll den vorgegebenen Ausschaltpunkt DVLLVUBR, so dass zum achten Zeitpunkt t₈ die Betriebsbremse 1 deaktiviert, der logische Wert der Bremsanforderung auf Null zurückgesetzt, die Schubabschaltung ebenfalls deaktiviert und der logische Wert auf Null zurückgesetzt werden, die Leerlaufregelung deaktiviert und der logische Wert zurückgesetzt bleiben. Vom achten Zeitpunkt t₈ an kann dann die Fahrgeschwindigkeitsregelung 20 wieder mit Hilfe der Momentenanforderung mrfgr_w erfolgen, die vom achten Zeitpunkt t₈ an wieder ansteigt.

Der Verlauf der Differenz v_ist - v_soll in Figur 3a) ist beispielhaft gewählt und kann sich beispielsweise auf Grund einer Fahrstrecke mit zwei unterschiedlich starken Gefällen ergeben, wobei zwischen dem Zeitpunkt t = 0 und dem vierten Zeitpunkt t₄ ein geringeres und zwischen dem fünften Zeitpunkt t₅ und dem achten Zeitpunkt t₈ ein stärkeres Gefälle vorliegt, das auch zu einer größeren Differenz v_ist - v_soll führt.

Aus dem Beispiel in Figur 3 ist außerdem zu erkennen, dass bei aktivierter Betriebsbremse 1 auch die Schubabschaltung aktiviert ist, nicht jedoch die Leerlaufregelung 5.

Gemäß dem beschriebenen Ausführungsbeispiel verläuft die Fahrgeschwindigkeitsregelung gestuft, wobei bei zunehmender Differenz v_ist - v_soll der Fahrgeschwindigkeit zunächst mit einer Reduzierung der Momentenanforderung der Fahrgeschwindigkeitsregelung 20, dann in einem zweiten Schritt durch Aktivierung der Leerlaufregelung 5 und damit Reduzierung der Momentenanforderung von aktivierten Nebenverbrauchem, dann in einem dritten Schritt durch Schubabschaltung und damit in diesem Beispiel durch Unterbrechung der Kraftstoffeinspritzung und schließlich in einem vierten Schritt durch Aktivierung der Betriebsbremse entgegnet wird. Dabei werden in Abhängigkeit der maximal erreichten Differenz v_ist - v_soll nicht unbedingt alle genannten Schritte eingeleitet, je nach dem, welche vorgegebenen Geschwindigkeitsdifferenzen durch die Differenz v_ist - v_soll überschritten werden.

Dabei ist beim Ausführungsbeispiel nach Figur 3 der Schritt mit der Zuschaltung weiterer Nebenaggregate beim Überschreiten der sechsten vorgegebenen Geschwindigkeitsdifferenz gemäß dem Ausführungsbeispiel nach Figur 2 nicht vorgesehen. Wesentlich für die Erfindung ist die Aktivierung der Betriebsbremse bei Überschreiten der ersten vorgegebenen Geschwindigkeitsdifferenz durch die Differenz v_ist - v_soll der Fahrgeschwindigkeit. Die weiteren Schritte der Aktivierung der Schubabschaltung, der Aktivierung der Leerlaufregelung und/oder der Aktivierung eines oder mehrerer weiterer Nebenaggregate können in beliebiger Kombination optional zusätzlich vorgesehen sein. Sind der Schritt der Schubabschaltung und der Leerlaufregelung beide vorgesehen, so kann, wie in Figur 3 beschrieben, die Leerlaufregelung deaktiviert werden, wenn die Schubabschaltung aktiviert wird.

Der Schritt der Veränderung der Momentenanforderung gemäß Figur 3b) stellt die übliche Fahrgeschwindigkeitsregelung dar, die nur dann erfindungsgemäß durch die Betriebsbremse und gegebenenfalls die Motorbremse unterstützt wird, wenn die Differenz v_ist - v_soll der Fahrgeschwindigkeit die entsprechenden vorgegebenen Geschwindigkeitsdifferenzen überschreitet und eine reine Anpassung der Momentenanforderung für die Fahrgeschwindigkeitsregelung nicht mehr ausreicht.

Gemäß der Ausführungsform nach Figur 3 wird im Falle der Aktivierung der Betriebsbremse 1 zur Reduzierung der Differenz v_ist - v_soll der normale Regelbetrieb der Fahrzeugregelung 20 durch Variation der Momentenanforderung gemäß Figur 3b) erst dann wieder eingeleitet, wenn die Betriebsbremse zum achten Zeitpunkt t₈ wieder deaktiviert wurde, weil die Differenz v_ist - v_soll unter den vorgegebenen Ausschaltpunkt DVLLVUBR absinkt. Erst nach dem achten Zeitpunkt t₈ wird dann wieder ein Motormoment von der Fahrzeugregelung 20 angefordert. Dadurch, dass zwischen dem siebten Zeitpunkt t₇ und dem achten Zeitpunkt t₈ gemäß Figur 3e) und Figur 3d) bei aktivierter Betriebsbremse 1 auch die Schubabschaltung aktiviert ist und gemäß Figur 3c) bei aktivierter Schubabschaltung die Leerlaufregelung 5 deaktiviert ist, wird bei aktivierter Betriebsbremse 1 sowohl die Hysterese der Leerlaufregelung, als auch die Hysterese der Schubabschaltung beim Ausführungsbeispiel der Figur 3 deaktiviert. Das Ausführungsbeispiel der Figur 3 setzt den Ablaufplan nach Figur 2 um mit dem einzigen Unterschied, dass beim Ausführungsbeispiel nach Figur 3 wie beschrieben der Schritt mit der Zuschaltung eines oder mehrer weiterer Nebenaggregate bei Überschreiten der sechsten vorgegebenen Geschwindigkeitsdifferenz durch die Differenz v_ist - v_soll der Fahrgeschwindigkeit nicht realisiert ist.

Die vorgegebenen Geschwindigkeitsdifferenzen können geeignet gewählt bzw. appliziert werden, beispielsweise derart, dass die Leerlaufregelung erst dann einsetzt, wenn die Momentenanforderung der Fahrgeschwindigkeitsregelung 20 bereits bis auf Null reduziert wurde, und dass die Schubabschaltung erst dann einsetzt, wenn die Momentenanforderung aktivierter Nebenaggregate mittels der Leerlaufregelung 5 bereits sämtlich auf Null reduziert wurden. Die erste vorgegebene Geschwindigkeitsdifferenz kann beispielsweise so vorgegeben werden, dass die Aktivierung der Betriebsbremse 1 erst dann erfolgt, wenn die durch die Schubabschaltung und gegebenenfalls weitere Aktivierung von einem oder mehreren Nebenaggregaten erzielte Motorbremswirkung bereits einen Maximalwert erreicht hat.

## Patentansprüche

1. Verfahren zur Regelung der Geschwindigkeit eines Fahrzeugs, bei dem bei Überschreiten einer vorgegebenen Sollgeschwindigkeit durch eine Istgeschwindigkeit des Fahrzeugs um mehr als eine erste vorgegebene Geschwindigkeitsdifferenz eine Betriebsbremse (1) des Fahrzeugs aktiviert wird, wobei die erste vorgegebene Geschwindigkeitsdifferenz größer als Null ist, und bei dem die Betriebsbremse (1) des Fahrzeugs aufgrund einer Überschreitung der vorgegebenen Sollgeschwindigkeit durch die Istgeschwindigkeit des Fahrzeugs nicht aktiviert wird, wenn die Überschreitung geringer als die erste vorgegebene Geschwindigkeitsdifferenz ist.

2. Verfahren nach Anspruch 1, **dadurch gekennzeichnet, dass** die Betriebsbremse (1) deaktiviert wird, wenn die Istgeschwindigkeit die Sollgeschwindigkeit wieder unterschreitet.

3. Verfahren nach einem der vorherigen Ansprüche, **dadurch gekennzeichnet, dass** bei Überschreiten der Sollgeschwindigkeit durch die Istgeschwindigkeit zunächst eine Momentenanforderung der Fahrgeschwindigkeitsregelung (20) reduziert wird.

4. Verfahren nach einem der vorherigen Ansprüche, **dadurch gekennzeichnet, dass** bei Überschreiten der Sollgeschwindigkeit durch die Istgeschwindigkeit um eine zweite vorgegebene Geschwindigkeitsdifferenz, die kleiner als die erste vorgegebene Geschwindigkeitsdifferenz ist, eine Leerlaufregelung (5) aktiviert und die Momentenanforderung von aktivierten Nebenaggregaten reduziert wird.

5. Verfahren nach Anspruch 4, **dadurch gekennzeichnet, dass** die Leerlaufregelung (5) deaktiviert wird, wenn die Differenz zwischen der Istgeschwindigkeit und der Sollgeschwindigkeit eine dritte vorgegebene Geschwindigkeitsdifferenz, die kleiner als die zweite vorgegebene Geschwindigkeitsdifferenz ist, unterschreitet.

6. Verfahren nach Anspruch 4 oder 5, **dadurch gekennzeichnet, dass** die Leerlaufregelung (5) deaktiviert wird, solange die Betriebsbremse (1) aktiviert ist.

7. Verfahren nach einem der vorherigen Ansprüche, **dadurch gekennzeichnet, dass** bei Überschreiten der Sollgeschwindigkeit durch die Istgeschwindigkeit um eine vierte vorgegebene Geschwindigkeitsdifferenz, die kleiner als die erste vorgegebene Geschwindigkeitsdifferenz ist, eine Schubabschaltung aktiviert wird.

8. Verfahren nach Anspruch 7, **dadurch gekennzeichnet, dass** die Schubabschaltung deaktiviert wird, wenn die Differenz zwischen der Istgeschwindigkeit und der Sollgeschwindigkeit eine fünfte vorgegebene Geschwindigkeitsdifferenz, die kleiner als die vierte vorgegebene Geschwindigkeitsdifferenz ist, unterschreitet.

9. Verfahren nach Anspruch 7 oder 8, soweit sie auf Anspruch 4, 5 oder 6 rückbezogen sind, **dadurch gekennzeichnet, dass** die vierte vorgegebene Geschwindigkeitsdifferenz größer als die zweite vorgegebene Geschwindigkeitsdifferenz gewählt wird und dass die Leerlaufregelung (5) deaktiviert wird, wenn die Schubabschaltung aktiviert wird.

10. Verfahren nach einem der Ansprüche 7 bis 9, **dadurch gekennzeichnet, dass** die Schubabschaltung aktiviert bleibt, solange die Betriebsbremse (1) aktiviert ist.

11. Verfahren nach einem der vorherigen Ansprüche, **dadurch gekennzeichnet, dass** bei Überschreiten der Sollgeschwindigkeit durch die Istgeschwindigkeit um eine sechste vorgegebene Geschwindigkeitsdifferenz, die kleiner als die erste vorgegebene Geschwindigkeitsdifferenz ist, ein Nebenaggregat (15) aktiviert wird.

## Claims

1. Method for controlling the speed of a vehicle, in which, when a predefined setpoint speed is exceeded by an actual speed of the vehicle by more than a first predefined speed difference, a service brake (1) of the vehicle is activated, wherein the first predefined speed difference is greater than zero, and in which the service brake (1) of the vehicle is not activated owing to the predefined setpoint speed being exceeded by the actual speed of the vehicle if it is exceeded by less than the first predefined speed difference.

2. Method according to Claim 1, **characterized in that** the service brake (1) is deactivated if the actual speed drops below the setpoint speed again.

3. Method according to one of the preceding claims, **characterized in that**, when the setpoint speed is exceeded by the actual speed, a torque request by the cruise controller (20) is initially reduced.

4. Method according to one of the preceding claims, **characterized in that**, when the setpoint speed is exceeded by the actual speed by a second predefined speed difference which is less than the first predefined speed difference, an idling controller (5) is activated and the torque request by activated secondary assemblies is reduced.

5. Method according to Claim 4, **characterized in that** the idling controller (5) is deactivated if the difference between the actual speed and the setpoint speed drops below a third predefined speed difference which is less than the second predefined speed difference.

6. Method according to Claim 4 or 5, **characterized in that** the idling controller (5) is deactivated as long as the service brake (1) is activated.

7. Method according to one of the preceding claims, **characterized in that**, when the setpoint speed is exceeded by the actual speed by a fourth predefined speed difference which is less than the first predefined speed difference, an overrun cutoff is activated.

8. Method according to Claim 7, **characterized in that** the overrun cutoff is deactivated if the difference between the actual speed and the setpoint speed drops below a fifth predefined speed difference which is less than the fourth predefined speed difference.

9. Method according to Claim 7 or 8, as far as they are referred back to Claim 4, 5 or 6, **characterized in that** a higher value is selected for the fourth predefined speed difference than for the second predefined speed difference, and **in that** the idling controller (5) is deactivated if the overrun cutoff is activated.

10. Method according to one of Claims 7 to 9, **characterized in that** the overrun cutoff remains activated as long as the service brake (1) is activated.

11. Method according to one of the preceding claims, **characterized in that**, when the setpoint speed is exceeded by the actual speed by a sixth predefined speed difference which is less than the first predefined speed difference, a secondary assembly (15) is activated.

## Revendications

1. Procédé de régulation de la vitesse d'un véhicule selon lequel on active un frein de fonctionnement (1) du véhicule si la vitesse réelle du véhicule dépasse une vitesse de consigne prédéfinie de plus d'une première différence de vitesses, prédéfinie, ,
la première différence de vitesses prédéfinie est égale à 0 et le frein de service (1) du véhicule n'est pas activé du fait que la vitesse réelle du véhicule dépasse la vitesse de consigne, prédéfinie, si le dépassement est inférieur à la première différence de vitesses, prédéfinie.

2. Procédé selon la revendication 1,
**caractérisé en ce qu'**
on neutralise le frein de service (1) si la vitesse réelle passe de nouveau en dessous de la vitesse de consigne.

3. Procédé selon l'une des revendications précédentes,
**caractérisé en ce qu'**
en cas de dépassement de la vitesse de consigne par la vitesse réelle, on réduit tout d'abord la demande de couple de la régulation de vitesse de déplacement (20).

4. Procédé selon l'une des revendications précédentes,
**caractérisé en ce que**
si la vitesse réelle dépasse la vitesse de consigne d'une seconde différence de vitesses, prédéfinie, inférieure à la première différence de vitesse, prédéfinie, on active la régulation de ralenti (5) et on réduit la demande de couple activée par les équipements accessoires.

5. Procédé selon la revendication 4,
**caractérisé en ce qu'**
on neutralise la régulation de ralenti (5) si la différence entre la vitesse réelle et la vitesse de consigne passe en dessous d'une troisième différence de vitesses, prédéfinie, inférieure à la seconde différence de vitesses, prédéfinie.

6. Procédé selon la revendication 4 ou 5,
**caractérisé en ce qu'**
on neutralise la régulation de ralenti (5) aussi longtemps que le frein de service (1) est actionné.

7. Procédé selon l'une des revendications précédentes,
**caractérisé en ce qu'**
en cas de dépassement de la vitesse de consigne par la vitesse réelle, selon une quatrième différence de vitesses, prédéfinie, inférieure à la première différence de vitesses, prédéfinie, on active une coupure de poussée.

8. Procédé selon la revendication 7,
**caractérisé en ce qu'**
on neutralise la coupure de poussée si la différence entre la vitesse réelle et la vitesse de consigne passe en dessous d'une cinquième différence de vitesses, prédéfinie, inférieure à la quatrième différence de vitesses, prédéfinie.

9. Procédé selon la revendication 7 ou la revendication 8, dans la mesure où elles dépendent des revendications 4, 5 ou 6,
**caractérisé en ce qu'**
on choisit la quatrième différence de vitesses, prédéfinie, supérieure à la seconde différence de vitesses, prédéfinie et on neutralise la régulation de ralenti (5) si la coupure de poussée est activée.

10. Procédé selon l'une des revendications 7 à 9,
**caractérisé en ce qu'**
on laisse la coupure de poussée activée aussi longtemps que le frein de service (1) est activé.

11. Procédé selon l'une des revendications précédentes,
**caractérisé en ce qu'**
en cas de dépassement de la vitesse de consigne par la vitesse réelle d'une sixième différence de vitesses, prédéfinie, inférieure à la première différence de vitesses, prédéfinie, on active un équipement accessoire (15).
